# EUROPÄISCHE PATENTSCHRIFT

(11) **EP 4 320 670 B1**
(45) Veröffentlichungstag und Bekanntmachung des Hinweises auf die Patenterteilung: **15.10.2025**
(21) Anmeldenummer: 22716326.8
(22) Anmeldetag: 04.04.2022
(51) Int. Cl.: H01M 10/48

(54) **VERBINDUNGSEINHEIT ZUM ELEKTRISCHEN KONTAKTIEREN VON MINDESTENS ZWEI SPEICHERZELLEN, SPEICHEREINHEIT UND VERFAHREN**
CONNECTING UNIT FOR ELECTRICALLY CONTACTING AT LEAST TWO STORAGE CELLS, STORAGE UNIT, AND METHOD
UNITÉ DE CONNEXION POUR LA MISE EN CONTACT ÉLECTRIQUE D'AU MOINS DEUX CELLULES DE STOCKAGE, UNITÉ DE STOCKAGE ET PROCÉDÉ

(30) Priorität: 06.04.2021 DE 102021108519
(43) Veröffentlichungstag der Anmeldung: 14.02.2024
(73) Patentinhaber: Müller Service GmbH, 87781 Ungerhausen (DE)
(72) Erfinder: WEGENER, Maximilian, 87435 Kempten (Allgäu) (DE)
(74) Vertreter: Heeschen Pültz Patentanwälte PartGmbB
(86) Internationale Anmeldenummer: PCT/DE2022/100254
(87) Internationale Veröffentlichungsnummer: WO 2022/214138

(56) Entgegenhaltungen:
- EP-A1- 2 618 397
- EP-A1- 3 192 111
- EP-B1- 3 192 111
- DE-A1- 102011 120 470
- DE-A1- 19 810 746

## Beschreibung

Die Erfindung betrifft eine Verbindungseinheit zum elektrischen Kontaktieren von mindestens zwei Speicherzellen zur Speicherung elektrischer Energie, eine erste Speichereinheit und eine zweite Speichereinheit zur Speicherung elektrischer Energie sowie Verfahren zur Herstellung einer ersten Speichereinheit und einer zweiten Speichereinheit.

Verbindungseinheiten zum elektrischen Kontaktieren von mindestens zwei Speicherzellen sind grundsätzlich bekannt. Derartige Verbindungseinheiten sind auch als Stromsammler oder als Busbar bekannt. Speichereinheiten, beispielsweise Akkumulatoren oder Batterien für elektrisch betriebene Kraftfahrzeuge, umfassen üblicherweise eine Vielzahl an Speicherzellen, die mit Verbindungseinheiten verbunden sind. Die Speicherzellen können beispielsweise Batteriezellen sein. Eine als Batterie ausgebildete Speichereinheit ist beispielsweise ein elektrochemischer Energiespeicher.

Während der Nutzungsdauer einer solchen Speichereinheit treten bzw. tritt üblicherweise an mehreren der Speicherzellen Defekte bzw. Verschleiß auf, sodass deren Leistungsfähigkeit verringert ist. Diese Speicherzellen reduzieren die Leistungsfähigkeit der Speichereinheit.

Speichereinheiten können wiederaufbereitet werden, indem Speicherzellen mit Defekten ausgetauscht werden. Unter einem Defekt kann auch Verschleiß verstanden werden, der die Leistungsfähigkeit der Speicherzelle reduziert. Der Austausch dieser Speicherzellen erfolgt unter anderem dadurch, dass zumindest eine Verbindungseinheit von der Speichereinheit entfernt wird. Das Entfernen der Verbindungseinheit führt jedoch häufig dazu, dass die Speichereinheit beschädigt wird. Aufgrund dessen werden üblicherweise die Verbindungseinheiten mit einem hohen technischen Aufwand von den einzelnen Speicherzellen entfernt, sodass diese auch nach dem Entfernen der Verbindungseinheit intakt bleiben.

Für die meisten Anwendungsfälle derartig aufbereiteter Speichereinheiten ist der im Vorherigen genannte Aufwand jedoch aus wirtschaftlichen Gründen nicht sinnvoll. Daher werden oftmals Speichereinheiten mit Speicherzellen, die zumindest teilweise eine verringerte Leistungsfähigkeit aufweisen, für einen sogenannten zweiten Lebenszyklus, insbesondere als Stromspeicher, verwendet. Diese Stromspeicher haben jedoch eine geringe Leistungsfähigkeit, da sich die Anzahl an defekten Speicherzellen über die Nutzungsdauer weiter erhöht. Derartige Stromspeicher werden beispielsweise als stationäre elektrische Energiespeicher verwendet.

Es ist bevorzugt, dass auch derartige Speichereinheiten eine vergleichsweise hohe elektrische Leistung abgeben können und somit die Leistungsfähigkeit solcher Speichereinheiten auch im zweiten Lebenszyklus erhöht ist. Darüber hinaus ist der Wiederaufbereitungsprozess effizient zu gestalten, da andernfalls keine wirtschaftliche Nutzung im zweiten Lebenszyklus möglich ist.

Die EP 3 192 111 A1 offenbart einen Verbinder für Batteriepacks. Die DE 198 10 746 A1 offenbart eine Platine mit einer Schaltung zur Überwachung einer mehrzelligen Akkumulatorbatterie. Die DE 10 2011 120 470 A1 offenbart eine Batterie mit einer Anzahl von elektrisch miteinander verschalteten Einzelzellen und Verfahren zur Wartung, Reparatur und/oder Optimierung einer solchen Batterie.

Es ist daher eine Aufgabe der Erfindung, eine Verbindungseinheit zum elektrischen Kontaktieren von mindestens zwei Speicherzellen zur Speicherung elektrischer Energie, eine erste Speichereinheit und eine zweite Speichereinheit zur Speicherung elektrischer Energie sowie Verfahren zur Herstellung einer ersten Speichereinheit und einer zweiten Speichereinheit bereitzustellen, die einen oder mehrere der genannten Nachteile vermindern oder beseitigen. Es ist insbesondere eine Aufgabe der Erfindung eine Lösung bereitzustellen, die die Aufbereitung einer Speichereinheit zur Speicherung elektrischer Energie verbessert.

Gemäß einem ersten Aspekt wird diese Aufgabe gelöst durch eine Verbindungseinheit zum elektrischen Kontaktieren von mindestens zwei Speicherzellen zur Speicherung elektrischer Energie, umfassend einen stromleitenden Verbindungskörper, mindestens zwei Kontaktabschnitte, die zur Verbindung mit den Speicherzellen ausgebildet sind, wobei mindestens einer der zwei Kontaktabschnitte eine Sollbruchstelle aufweist und/oder wobei die Verbindungseinheit mindestens einen Öffnungsabschnitt umfasst, der angeordnet und ausgebildet ist, dass zumindest ein Teil eines an einer Speicherzelle verbliebenen Kontaktabschnitts in den Öffnungsabschnitt hineinragen kann.

Die Verbindung von zwei Speicherzellen mittels der im Vorherigen beschriebenen Verbindungseinheit kann in vorteilhafter Weise gelöst werden, indem die Verbindungseinheit von den Speicherzellen derart entfernt wird, dass die Verbindungseinheit an der oder den Sollbruchstellen bricht und somit ein Teil der Verbindungseinheit an den Speicherzellen verbleibt. Die Erfinder haben überraschenderweise herausgefunden, dass Teile der Verbindungseinheit an den Speicherzellen verbleiben können, ohne dass die Herstellung einer Speichereinheit für den zweiten Lebenszyklus wesentlich erschwert wird. Der Erfindung lag darüber hinaus die Erkenntnis zugrunde, dass die in der Industrie seit langem vorherrschende Meinung, dass die Verbindungseinheit vollständig von den Speicherzellen zu entfernen sei, nicht zutreffend ist, da der verbliebene Kontaktabschnitt in dem Öffnungsabschnitt anordenbar ist oder ein Kontaktabschnitt einer Verbindungseinheit im zweiten Lebenszyklus auf den verbliebenen Kontaktabschnitt geschweißt werden kann.

Die Verbindungseinheit zum elektrischen Kontaktieren von mindestens zwei Speicherzellen ist insbesondere derart ausgebildet, dass ein elektrischer Strom von einer ersten Speicherzelle zu einer zweiten Speicherzelle bei bestimmungsgemäßer Anordnung der Verbindungseinheit fließen kann. Hierfür weist die Verbindungseinheit insbesondere ein elektrisch leitfähiges Material auf.

Die Verbindungseinheit umfasst den stromleitenden Verbindungskörper, die mindestens zwei Kontaktabschnitte und mindestens eine Sollbruchstelle an einem der Kontaktabschnitte und/oder den mindestens einen Öffnungsabschnitt. Der Verbindungskörper und die Kontaktabschnitte können einstückig ausgebildet sein. Darüber hinaus können der Verbindungskörper und die Kontaktabschnitte stoffschlüssig miteinander verbunden sein. Darüber hinaus können auch der Verbindungskörper und die Kontaktabschnitte separate Bauteile sein, die elektrisch leitend miteinander verbunden sind.

Die Kontaktabschnitte sind derart ausgebildet, dass diese mit Speicherzellen zur Speicherung elektrischer Energie elektrisch verbindbar sind. Die Kontaktabschnitte sind vorzugsweise derart ausgebildet, dass eine Verbindung des Kontaktabschnittes mit den Speicherzellen schweißbar und/oder lötbar ist.

Die Verbindungseinheit weist vorzugsweise eine Vielzahl an Kontaktabschnitten auf, die benachbart zueinander angeordnet sind. Es ist insbesondere bevorzugt, dass die Kontaktabschnitte in einer Reihe angeordnet sind. Leitabschnitte dieser Speicherzellen sind ebenfalls benachbart zueinander angeordnet. Die Verbindungseinheit weist zu derartigen Leitabschnitten korrespondierende Kontaktabschnitte auf, sodass die Kontaktabschnitte mit den Leitabschnitten der Speicherzellen in Verbindung bringbar sind. Vorzugsweise weisen zwei, mehrere oder alle Kontaktabschnitte eine Sollbruchstelle auf.

Die Kontaktabschnitte der Verbindungseinheit können beispielsweise eine Kontaktabschnittsfläche von weniger, gleich oder mehr als 1 mm², mehr als 5 mm², mehr als 10 mm², mehr als 15 mm², mehr als 25 mm², mehr als 100 mm², mehr als 500 mm², mehr als 1000 mm² und/oder mehr als 2000 mm² aufweisen.

Die Kontaktabschnitte sind vorzugsweise angeordnet und ausgebildet, dass durch diese hindurch geschweißt werden kann und durch eine Verschweißung mit einer benachbarten Speicherzelle eine stromleitende Verbindung ausbildbar ist.

Beim Entfernen der Verbindungseinheit von einer Speichereinheit verbleiben zumindest Teile der Kontaktabschnitte an den Speicherzellen. Diese Kontaktabschnitte werden im Folgenden als verbliebene Kontaktabschnitte bezeichnet. Wenn diese Speicherzellen wieder mit einer Verbindungseinheit kontaktiert werden, befinden sich zumindest Teile der Kontaktabschnitte zwischen den Speicherzellen und der Verbindungseinheit. Da die verbliebenen Kontaktabschnitte unterschiedlich hoch auftragen, befinden sich deren distale Enden üblicherweise nicht in einer Verbindungsebene. Die Verbindungseinheit kann beispielsweise auf drei oder vier an den Speicherzellen verbliebenen Kontaktabschnitten aufliegen. Die weiteren Speicherzellen und/oder Kontaktabschnitte können von der Verbindungseinheit beabstandet sein, sodass eine Kontaktierung, beispielsweise mit einem Schweißverfahren, erschwert ist.

Die Verbindungseinheit mit dem Öffnungsabschnitt löst dieses Problem dadurch, dass die Beabstandungen der Verbindungseinheit zu den Speicherzellen nicht durch die verbliebenen Kontaktabschnitte beeinflusst werden, indem diese in den Öffnungsabschnitt hineinragen. Somit kann die Verbindungseinheit unabhängig von verbliebenen Kontaktabschnitten im Wesentlichen eben an den Speicherzellen angeordnet werden.

Der Öffnungsabschnitt kann auch als Freistelle bezeichnet werden. Der Öffnungsabschnitt kann eine von allen Seiten umschlossene Öffnung sein. Alternativ kann die Öffnung eine, zwei oder mehrere offene Seiten aufweisen. Ein solcher Öffnungsabschnitt weist insbesondere eine konkave Seite, beispielsweise eine Einmündung, auf. Die Geometrie des Öffnungsabschnitts entspricht vorzugsweise im Wesentlichen der Geometrie der Kontaktabschnitte und/oder der Sollbruchstelle. Der Öffnungsabschnitt weist vorzugsweise größere Abmessungen als die Kontaktabschnitte auf. Insbesondere ist es bevorzugt, dass zwischen dem Öffnungsabschnitt und dem Kontaktabschnitt eine Spielpassung ausbildbar ist. Die Kontaktabschnitte sind vorzugsweise in einer ersten Reihe benachbart zueinander angeordnet und zwei oder mehr Öffnungsabschnitte sind in einer zweiten Reihe benachbart zueinander angeordnet, sodass vorzugsweise jeweils ein Kontaktabschnitt und ein Öffnungsabschnitt nebeneinander angeordnet sind. Eine solche Anordnung wird auch als paarweise Anordnung der Kontaktabschnitte und der Öffnungsabschnitte bezeichnet.

Es ist ferner bevorzugt, dass die Verbindungseinheit eine erste Anzahl an Kontaktabschnitten und eine zweite Anzahl an Öffnungsabschnitten aufweist, wobei die erste Anzahl der zweiten Anzahl entspricht. Darüber hinaus ist es bevorzugt, dass die Kontaktabschnitte in einem ersten Anordnungsmuster und die Öffnungsabschnitte in einem zweiten Anordnungsmuster an dem Verbindungskörper angeordnet sind, wobei vorzugsweise das erste Anordnungsmuster dem zweiten Anordnungsmuster entspricht. Das erste und/oder zweite Anordnungsmuster kann beispielsweise reihenförmig und/oder zickzackförmig ausgebildet sein.

In einer bevorzugten Ausführungsvariante der Verbindungseinheit ist vorgesehen, dass die Sollbruchstelle derart ausgebildet ist, dass beim Entfernen der Verbindungseinheit von den mindestens zwei Speicherzellen, zumindest der Kontaktabschnitt mit der Sollbruchstelle zumindest teilweise von dem Verbindungskörper getrennt wird und vorzugsweise an der Speicherzelle verbleibt. Im Wesentlichen von dem Verbindungskörper getrennt, bedeutet insbesondere, dass der Kontaktabschnitt zumindest teilweise oder vollständig an der Speicherzelle verbleibt.

In einer weiteren bevorzugten Ausführungsvariante der Verbindungseinheit ist vorgesehen, dass die Sollbruchstelle derart ausgebildet ist, dass beim Entfernen der Verbindungseinheit eine vordefinierte Kerbwirkung entsteht. Üblicherweise wird die Verbindungseinheit von einem ersten Ende oder von einem zweiten Ende ausgehend von den Speicherzellen mechanisch durch Krafteinwirkung entfernt. Auf Basis dessen kann durch eine entsprechende Ausbildung der Sollbruchstelle eine Kerbwirkung vordefiniert werden. Eine Kerbwirkung ist insbesondere als eine örtliche Spannungskonzentration definiert. Beispielsweise kann die Sollbruchstelle eine Kerbe aufweisen oder als Kerbe ausgebildet sein, wobei die Kerbe die Kerbwirkung bewirkt.

Eine weitere bevorzugte Ausführungsvariante der Verbindungseinheit zeichnet sich dadurch aus, dass die Sollbruchstelle eine geringere Materialstärke aufweist als die mindestens zwei Kontaktabschnitte und/oder der Verbindungskörper. Es ist bevorzugt, dass die Sollbruchstelle bzw. die Sollbruchstellen und die mindestens zwei Kontaktabschnitte jeweils die gleiche Materialstärke aufweisen und der Verbindungskörper eine größere Materialstärke aufweist. Ein derartiger Materialstärkengradient kann eine Sollbruchstelle ausbilden.

Eine weitere bevorzugte Ausführungsvariante der Verbindungseinheit sieht vor, dass die Sollbruchstelle als ein seitlich offener Schlitz ausgebildet ist. Der seitlich offene Schlitz erstreckt sich vorzugsweise von einer seitlichen Kante des Verbindungskörpers bis zum korrespondierenden Kontaktabschnitt, sodass beim Entfernen der Verbindungseinheit eine Kerbwirkung entsteht.

Es ist bevorzugt, dass ein Verhältnis aus der Materialstärke der Sollbruchstelle und einer Materialstärke des Verbindungskörpers kleiner 0,8, kleiner 0,6, kleiner 0,4 und/oder kleiner 0,2 beträgt. Bei einer derartig ausgebildeten Verbindungseinheit wird die Sollbruchstelle unter anderem durch einen Absatz ausgebildet, der durch die zwei unterschiedlichen Materialstärken ausgebildet wird. Die Materialstärke der Sollbruchstelle kann beispielsweise durch einen Materialabtrag geringer ausgebildet werden als die Materialstärke des Verbindungskörpers und/oder der Kontaktabschnitte. Die Herstellung der Verbindungseinheit kann beispielsweise derart erfolgen, dass an dem Verbindungskörper für jede Sollbruchstelle ein Materialabtrag um einen der Sollbruchstelle zugeordneten Kontaktabschnitt herum erfolgt.

Eine weitere bevorzugte Fortbildung der Verbindungseinheit zeichnet sich dadurch aus, dass die Sollbruchstelle als eine Materialschwachstelle ausgebildet ist. Die Materialschwachstelle kann beispielsweise durch eine mechanische und/oder chemische Schwächung des Materials der Sollbruchstelle ausgebildet sein.

Eine weitere bevorzugte Ausführungsvariante der Verbindungseinheit zeichnet sich dadurch aus, dass die mindestens zwei Kontaktabschnitte und/oder der Verbindungskörper ein erstes Material und die Sollbruchstelle ein zweites Material aufweisen, wobei das erste Material verschieden von dem zweiten Material ausgebildet ist.

Es ist insbesondere bevorzugt, dass die Sollbruchstelle und die Kontaktabschnitte das zweite Material aufweisen und der Verbindungskörper das erste Material aufweist. Es ist darüber hinaus bevorzugt, dass die Kontaktabschnitte und der Verbindungskörper unterschiedliche Materialien aufweisen. Dass das erste Material verschieden von dem zweiten Material ausgebildet ist, kann durch eine, zwei oder mehrere unterschiedliche Eigenschaften des ersten und des zweiten Materials ermöglicht werden. Beispielsweise kann das erste Material eine größere Härte aufweisen als das zweite Material.

Gemäß einer weiteren bevorzugten Ausführungsvariante der Verbindungseinheit ist vorgesehen, dass die Sollbruchstelle eine, zwei oder mehrere Öffnungen aufweist, wobei vorzugsweise die Öffnung oder die zwei oder mehreren Öffnungen als Kerbe bzw. Kerben und/oder als Perforation bzw. Perforationen ausgebildet ist bzw. sind. Darüber hinaus kann die Sollbruchstelle eine Ritzspur aufweisen oder als Ritzspur ausgebildet sein. Alternativ oder ergänzend ist es bevorzugt, dass die Sollbruchstelle als eine, zwei oder mehrere Öffnungen ausgebildet ist, wobei vorzugsweise die Öffnung bzw. die Öffnungen als Kerbe bzw. Kerben und/oder als Perforation bzw. Perforationen ausgebildet ist bzw. sind.

Die Öffnung kann als Sackloch oder als Durchgangsöffnung ausgebildet sein. Es ist darüber hinaus bevorzugt, dass die Sollbruchstelle die im Vorherigen genannte Öffnung beziehungsweise genannten Öffnungen aufweist und darüber hinaus die im Vorherigen beschriebenen unterschiedlichen Materialien und/oder unterschiedlichen Materialstärken aufweist.

Es ist insbesondere bevorzugt, dass der mindestens eine Öffnungsabschnitt eine Ausnehmung aufweist oder als Ausnehmung ausgebildet ist. Die Ausnehmung kann beispielsweise schlitzförmig ausgebildet sein. Die Ausnehmung bzw. die Ausnehmungen ist bzw. sind vorzugsweise als Durchgangsöffnung bzw. als Durchgangsöffnungen ausgebildet. Es ist insbesondere bevorzugt, dass die mindestens zwei Kontaktabschnitte und der mindestens eine Öffnungsabschnitt derart dimensioniert sind, dass einer der Kontaktabschnitte innerhalb des mindestens einen Öffnungsabschnitts anordenbar ist.

Gemäß einem weiteren Aspekt wird die eingangs genannte Aufgabe gelöst durch eine erste Speichereinheit zur Speicherung elektrischer Energie, insbesondere für ein elektrisch angetriebenes Fahrzeug und/oder einen Stromspeicher, umfassend mindestens zwei Speicherzellen, eine erste Verbindungseinheit nach einer der im Vorherigen genannten Ausführungsvarianten, wobei die mindestens zwei Speicherzellen mittels der ersten Verbindungseinheit elektrisch verbunden sind.

Die elektrische Verbindung zwischen den mindestens zwei Speicherzellen wird insbesondere dadurch ausgebildet, dass jeweils eine Speicherzelle mit einem Kontaktabschnitt elektrisch verbunden ist und die Kontaktabschnitte mittels des stromleitenden Verbindungskörpers ebenfalls elektrisch verbunden sind. Die Speicherzellen weisen vorzugsweise Leitabschnitte auf, wobei jeweils ein Leitabschnitt mit einem Kontaktabschnitt der Verbindungseinheit verbunden ist. Die Leitabschnitte können beispielsweise durch Pole der Speicherzellen ausgebildet werden oder Pole der Speicherzellen sein. Es ist insbesondere bevorzugt, dass die erste Speichereinheit eine Vielzahl an Speicherzellen aufweist und die erste Verbindungseinheit eine zu der Anzahl an Speicherzellen korrespondierende Anzahl an Kontaktabschnitten aufweist, sodass vorzugsweise an jedem Leitabschnitt ein Kontaktabschnitt anordenbar ist.

Es ist bevorzugt, dass die erste Speichereinheit als elektrischer Energiespeicher eines elektrisch betriebenen Fahrzeugs zur Bereitstellung einer Antriebsenergie umfasst ist. Darüber hinaus kann die erste Speichereinheit von einer Ladevorrichtung für elektrisch betriebene Fahrzeuge oder von einem stationären Speicher umfasst sein.

Gemäß einem weiteren Aspekt wird die eingangs genannte Aufgabe gelöst durch eine zweite Speichereinheit zur Speicherung elektrischer Energie, insbesondere für einen Stromspeicher, umfassend mindestens zwei Speicherzellen, wobei zumindest eine der Speicherzellen einen verbliebenen Kontaktabschnitt einer ersten Verbindungseinheit aufweist, eine zweite Verbindungseinheit, nach einer der im Vorherigen beschriebenen Ausführungsvarianten, wobei ein Öffnungsabschnitt der zweiten Verbindungseinheit derart angeordnet ist, dass der verbliebene Kontaktabschnitt in den Öffnungsabschnitt hineinragt, und/oder wobei ein Kontaktabschnitt der zweiten Verbindungseinheit mit dem verbliebenen Kontaktabschnitt verbunden ist, vorzugsweise stoffschlüssig, insbesondere schweißtechnisch, und wobei die mindestens zwei Speicherzellen mittels der zweiten Verbindungseinheit elektrisch verbunden sind.

Die zweite Verbindungseinheit umfasst vorzugsweise einen stromleitenden Verbindungskörper, mindestens zwei Kontaktabschnitte, die zur Verbindung mit den Speicherzellen ausgebildet sind, wobei mindestens einer der zwei Kontaktabschnitte eine Sollbruchstelle aufweist und/oder wobei die Verbindungseinheit mindestens einen Öffnungsabschnitt umfasst, der angeordnet und ausgebildet ist, dass zumindest ein Teil des an der Speicherzelle verbliebenen Kontaktabschnitts in den Öffnungsabschnitt hineinragen kann.

Die zweite Speichereinheit basiert vorzugsweise auf der ersten Speichereinheit.

Die mindestens zwei Speicherzellen der zweiten Speichereinheit können beispielsweise Speicherzellen sein, die bereits in einer ersten Speichereinheit enthalten waren. Ferner können ein, zwei oder mehrere Speicherzellen mit verringerter Leistungsfähigkeit der ersten Speichereinheit durch leistungsfähigere Speicherzellen ausgetauscht werden. Dass eine der Speicherzellen einen Kontaktabschnitt einer ersten Verbindungseinheit aufweist, kann die Ursache haben, dass diese Speicherzellen mit einer ersten Verbindungseinheit miteinander verbunden waren und die Verbindungseinheit von den Speicherzellen derart entfernt wurde, dass beim Entfernen der Verbindungseinheit von den mindestens zwei Speicherzellen, die Kontaktabschnitte im Wesentlichen von dem Verbindungskörper getrennt wurden und an den Speicherzellen verblieben sind. Eine derart ausgebildete Speichereinheit kann in vorteilhaftweise hergestellt werden. Insbesondere durch die Möglichkeit, die zweite Verbindungseinheit im Wesentlichen eben auf den Speicherzellen anzuordnen und zu kontaktieren, reduziert den Herstellungsaufwand.

Dass zumindest eine der Speicherzellen einen Kontaktabschnitt einer ersten Verbindungseinheit aufweist, bedeutet insbesondere, dass zumindest eine der Speicherzellen zumindest einen Teil des Kontaktabschnitts der ersten Verbindungseinheit aufweist.

Es ist bevorzugt, dass die zweite Speichereinheit von einer Ladevorrichtung für elektrisch betriebene Fahrzeuge umfasst ist.

Die zweite Speichereinheit kann auch eine dritte, vierte oder weitere Speichereinheit sein, wobei zumindest eine der Speicherzellen zwei, drei oder mehrere verbliebene Kontaktabschnitte von ersten, zweiten und/oder weiteren Verbindungseinheiten aufweist, die eine dritte, vierte oder weitere Verbindungseinheit aufweist, nach einer der im Vorherigen beschriebenen Ausführungsvarianten, wobei Öffnungsabschnitte an den verbliebenen Kontaktabschnitten derart angeordnet sind, dass die verbliebenen Kontaktabschnitte in die Öffnungsabschnitte hineinragen, und/oder wobei Kontaktabschnitte der dritten, vierten oder weiteren Verbindungseinheit mit einem oder mehreren der verbliebenen Kontaktabschnitte stoffschlüssig, insbesondere schweißtechnisch verbunden sind, und wobei die mindestens zwei Speicherzellen mittels der dritten, vierten oder weiteren Verbindungseinheit elektrisch verbunden sind.

Gemäß einem weiteren Aspekt wird die eingangs genannte Aufgabe gelöst durch ein Verfahren zur Herstellung einer ersten Speichereinheit nach einer der im Vorherigen beschriebenen Ausführungsvarianten, umfassend die Schritte: Bereitstellen von mindestens zwei Speicherzellen zur Speicherung elektrischer Energie und einer ersten Verbindungseinheit zum elektrischen Kontaktieren der mindestens zwei Speicherzellen, nach einer der im Vorherigen genannten Ausführungsvarianten, und elektrisches Verbinden der zwei Speicherzellen mit der ersten Verbindungseinheit.

Die erste Verbindungseinheit weist einen stromleitenden Verbindungskörper und mindestens zwei Kontaktabschnitte, die zur Verbindung mit den Speicherzellen ausgebildet sind, auf. Ferner weist mindestens einer der Kontaktabschnitte eine Sollbruchstelle auf.

Das elektrische Verbinden kann beispielsweise über ein Schweißen, insbesondere ein Laserschweißen, oder ein Löten erfolgen.

Gemäß einem weiteren Aspekt wird die eingangs genannte Aufgabe gelöst durch ein Verfahren zur Herstellung einer zweiten Speichereinheit nach einer der im Vorherigen beschriebenen Ausführungsvarianten, umfassend die Schritte: Bereitstellen einer ersten Speichereinheit nach einer der im Vorherigen beschriebenen Ausführungsvarianten; Entfernen der ersten Verbindungseinheit derart, dass mindestens einer der Kontaktabschnitte der ersten Verbindungseinheit zumindest abschnittsweise an einer der Speicherzellen verbleibt, wobei vorzugsweise der mindestens eine verbliebene Kontaktabschnitt von dem Verbindungskörper an der Sollbruchstelle getrennt wird; Kontaktieren der Speicherzellen mittels einer zweiten Verbindungseinheit nach einer der im Vorherigen beschriebenen Ausführungsvarianten, mit mindestens zwei Kontaktabschnitten, die zur Verbindung mit den Speicherzellen ausgebildet sind; wobei der verbliebene Kontaktabschnitt in den Öffnungsabschnitt hineinragt und/oder wobei zumindest einer der Kontaktabschnitte der zweiten Verbindungseinheit mit dem verbliebenen Kontaktabschnitt verbunden wird, vorzugsweise stoffschlüssig, insbesondere schweißtechnisch.

Das im Vorherigen beschriebene Verfahren kann auch zur Herstellung einer dritten, vierten oder weiteren Speichereinheit verwendet werden, wobei der Öffnungsabschnitt auch zwei oder mehr Ausnehmungen zur Aufnahme von mehreren Kontaktabschnitten je Speicherzelle aufweisen kann.

In einer bevorzugten Ausführungsvariante umfasst das Verfahren den Schritt: Austauschen einer, zwei oder mehrerer der Speicherzellen der ersten Speichereinheit. Die eine, zwei oder mehreren Speicherzellen werden insbesondere durch Speicherzellen mit einer höheren Leistungsfähigkeit ausgetauscht. Die auszutauschenden Speicherzellen weisen vorzugsweise eine verringerte Leistungsfähigkeit auf. Es ist daher ferner bevorzugt, dass das Verfahren den Schritt umfasst: Detektion von Speicherzellen mit einer verringerten Leistungsfähigkeit. Eine verringerte Leistungsfähigkeit zeichnet sich insbesondere durch einen Leistungsabfall gegenüber einer vollständigen Leistungsfähigkeit von mehr als 20 %, mehr als 30 %, mehr als 40 % und/oder mehr als 50 % aus. Die hergestellte zweite Speichereinheit umfasst vorzugsweise bereits in der ersten Speichereinheit enthaltene Speicherzellen und zusätzliche Speicherzellen, die Speicherzellen mit einer geringen Leistungsfähigkeit der ersten Speichereinheit ersetzen.

Die Verfahren und ihre möglichen Fortbildungen weisen Merkmale beziehungsweise Verfahrensschritte auf, die sie insbesondere dafür geeignet machen, für eine Verbindungseinheit, eine erste Speichereinheit und/oder eine zweite Speichereinheit verwendet zu werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen der Verbindungseinheit verwiesen.

Bevorzugte Ausführungsbeispiele werden exemplarisch anhand der beiliegenden Figuren erläutert. Es zeigen:
- Figur 1:: schematische Ansichten von beispielhaften Ausführungsformen von Verbindungseinheiten;
- Figur 2:: eine schematische Ansicht einer beispielhaften Ausführungsform benachbart angeordneter Speicherzellen;
- Figur 3:: eine schematische Ansicht einer beispielhaften Ausführungsform einer ersten Speichereinheit;
- Figur 4:: eine schematische Ansicht der in Figur 3 gezeigten ersten Speichereinheit mit entfernten ersten Verbindungseinheiten;
- Figur 5:: eine schematische Ansicht einer beispielhaften Ausführungsform einer zweiten Speichereinheit;
- Figur 6:: eine schematische Ansicht der in Figur 5 gezeigten zweiten Speichereinheit mit entfernten zweiten Verbindungseinheiten;
- Figur 7:: eine schematische Ansicht einer beispielhaften Ausführungsform einer dritten Speichereinheit;
- Figur 8:: ein schematisches erstes Verfahren;
- Figur 9:: ein schematisches zweites Verfahren; und
- Figur 10:: ein schematisches drittes Verfahren.

In den Figuren sind gleiche oder im Wesentlichen funktionsgleiche bzw. -ähnliche Elemente mit den gleichen Bezugszeichen bezeichnet.

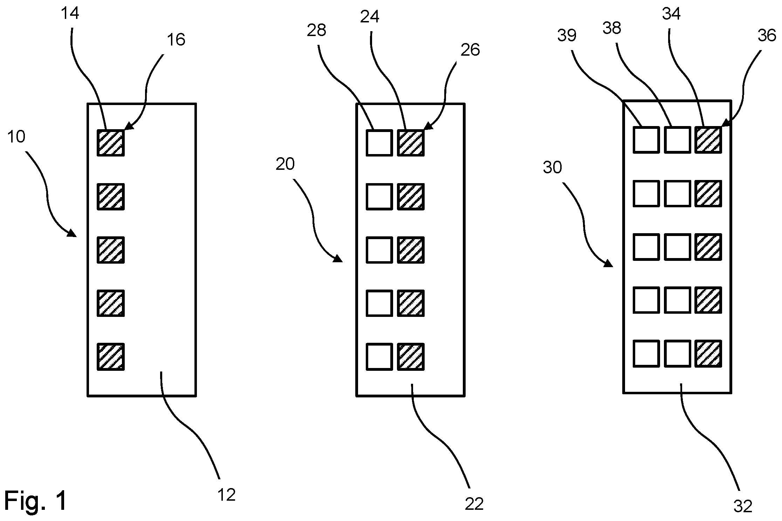

Figur 1 zeigt eine erste Verbindungseinheit 10. Die erste Verbindungseinheit 10 umfasst einen Verbindungskörper 12 und fünf Kontaktabschnitte 14, von denen lediglich ein Kontaktabschnitt mit dem Bezugszeichen 14 versehen ist. Die Kontaktabschnitte 14 weisen jeweils eine Sollbruchstelle 16 auf. Die Sollbruchstelle 16 kann beispielsweise den Kontaktabschnitt 14 einfassen, sodass die Geometrie der Sollbruchstelle 16 als Quadrat ausgebildet ist. Die Sollbruchstellen 16 können beispielsweise jeweils als eine Perforation am Außenumfang der Kontaktabschnitte 14 ausgebildet sein. Darüber hinaus kann die Sollbruchstelle 16 und/oder der Kontaktabschnitt 14 eine geringere Materialstärke als der Verbindungskörper 12 und/oder ein anderes Material als der Verbindungskörper 12 aufweisen.

Figur 1 zeigt darüber hinaus eine zweite Verbindungseinheit 20 mit einem Verbindungskörper 22. Die zweite Verbindungseinheit 20 weist fünf zweite Kontaktabschnitte 24 auf. Die zweiten Kontaktabschnitte 24 umfassen jeweils eine Sollbruchstelle 26. Die zweite Verbindungseinheit 20 weist ferner fünf Öffnungsabschnitte 28 auf. Die Öffnungsabschnitte 28 und die zweiten Kontaktabschnitte 24 sind jeweils paarweise angeordnet, sodass neben jedem zweiten Kontaktabschnitt 24 ein Öffnungsabschnitt 28 angeordnet ist. Die Öffnungsabschnitte 28 sind im Wesentlichen an der Position angeordnet, an der an der ersten Verbindungseinheit 10 die Kontaktabschnitte 14 angeordnet sind.

Durch eine derartige Anordnung kann mittels der zweiten Verbindungseinheit 20 eine in Bezug auf eine benutzte Speichereinheit eine verbesserte Speichereinheit bereitgestellt werden. Im Fall, dass die erste Verbindungseinheit 10 von den Speicherzellen einer Speichereinheit entfernt wird, werden die Kontaktabschnitte 14 von dem Verbindungskörper 12 mittels der Sollbruchstellen 16 zumindest abschnittsweise, also teilweise, entfernt. Die Kontaktabschnitte 14 verbleiben zumindest abschnittsweise an den Speicherzellen. Im Fall, dass die zweite Verbindungseinheit 20 an diesen Speicherzellen angeordnet wird, können die verbliebenen Kontaktabschnitte 14 in die Öffnungsabschnitte 28 hineinragen, sodass die zweite Verbindungseinheit 20 im Wesentlichen eben auf den Speicherzellen anordenbar ist.

Alternativ kann eine weitere erste Verbindungseinheit 10, 10' an den Speicherzellen angeordnet werden und die ersten Kontaktabschnitte 14 werden mit den verbliebenen Kontaktabschnitten und/oder den Speicherzellen verschweißt.

Darüber hinaus ist in Figur 1 eine dritte Verbindungseinheit 30 gezeigt, die für einen dritten Lebenszyklus einer Speichereinheit verwendet werden kann. Auch die dritte Verbindungseinheit weist einen Verbindungskörper 32, dritte Kontaktabschnitte 34 und jeweils Sollbruchstellen 36 auf. Die dritte Verbindungseinheit weist darüber hinaus zwei Öffnungsabschnitte 38, 39 auf, die jeweils neben einem dritten Kontaktabschnitt 34 angeordnet sind.

Sobald die zweite Verbindungseinheit 20 von einer Speichereinheit entfernt wird, verbleiben die zweiten Kontaktabschnitte 24 analog zur ersten Verbindungseinheit 10 an den Speicherzellen. Mittels der Öffnungsabschnitte 38, 39 der dritten Verbindungseinheit 30 wird somit ermöglicht, dass die dritte Verbindungseinheit eben auf den Speicherzellen anordenbar ist und diese mit Leitabschnitten der Speicherzellen in Kontakt bringbar ist, sodass eine Kontaktierung der Speicherzellen mit der dritten Verbindungseinheit vorteilhaft ermöglicht wird.

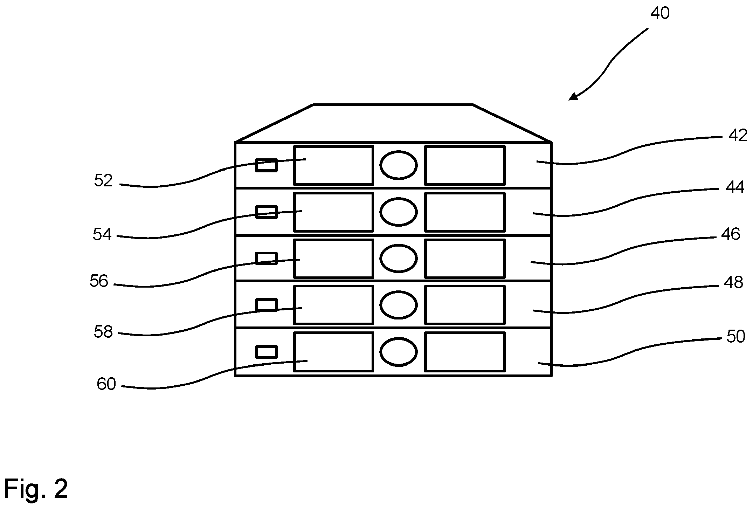

In Figur 2 sind fünf übereinander angeordnete Speicherzellen 42 - 50 gezeigt. Jede der Speicherzellen 42 - 50 umfasst zwei Leitabschnitte 52 - 60, wobei lediglich einer der Leitabschnitte 52 - 60 einer Speicherzelle mit einem Bezugszeichen versehen ist.

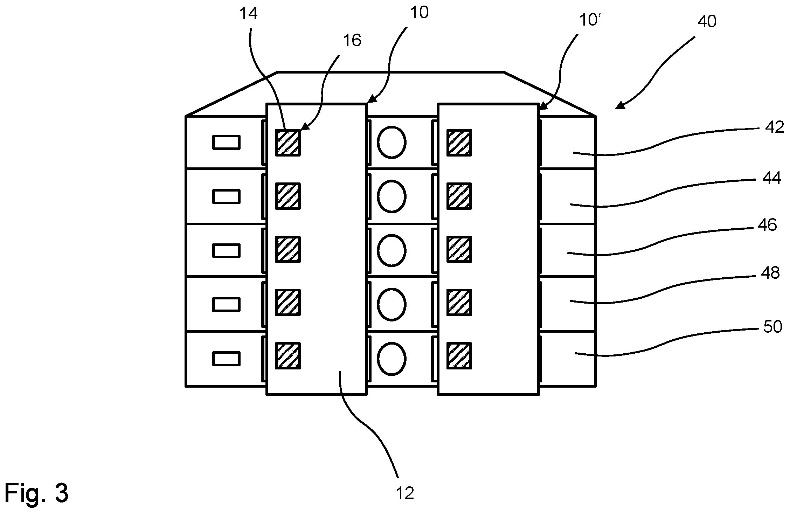

Figur 3 zeigt eine Speichereinheit 40, die die in Figur 2 gezeigten Speicherzellen 42 - 50 und zwei erste Verbindungseinheiten 10, 10' aufweist. Die Speicherzellen 42 - 50 sind mittels der ersten Verbindungseinheiten 10, 10' elektrisch verbunden. Hierfür sind die Verbindungseinheiten 10, 10' derart positioniert, dass jeweils ein Kontaktabschnitt 14 ein einem der Leitabschnitte 52 - 60 angeordnet ist. Eine dauerhafte Verbindung kann beispielsweise durch ein Verschweißen der Kontaktabschnitte 14 mit den Leitabschnitten 52 - 60 ausgebildet werden. Eine derartige Speichereinheit 40 kann beispielsweise in einem elektrisch betriebenen Fahrzeug verwendet werden.

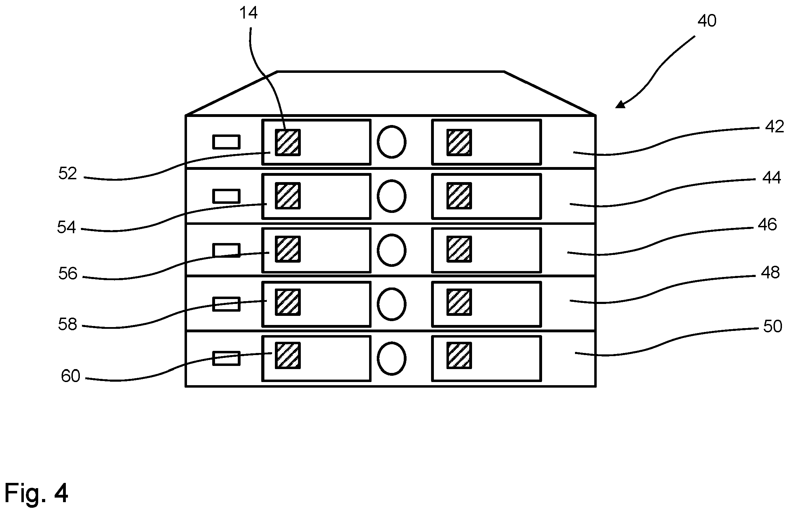

Figur 4 zeigt die im Vorherigen gezeigte Speichereinheit 40, wobei die ersten Verbindungseinheiten 10, 10' entfernt wurden. Es ist ersichtlich, dass die Kontaktabschnitte 14 an den Leitabschnitten 52 - 60 verblieben sind. Die ersten Verbindungseinheiten 10, 10' sind beispielsweise durch mechanische Krafteinwirkung entfernt worden, wobei durch die Sollbruchstellen 16 der Kontaktabschnitte 14 die Kontaktabschnitte 14 an den Leitabschnitten 52 - 60 verblieben sind.

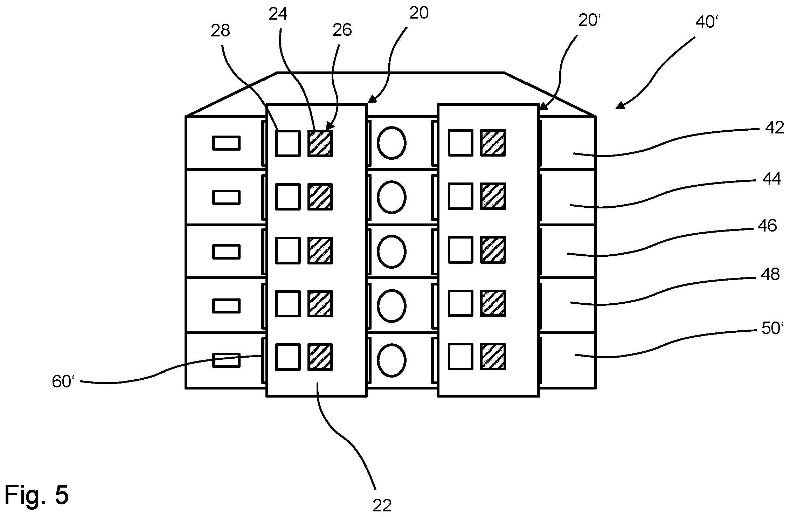

Figur 5 zeigt eine zweite Speichereinheit 40', wobei die Speicherzelle 50 durch eine Speicherzelle 50' mit höherer Leistungsfähigkeit mit zwei Leitabschnitten 60' ausgetauscht wurde, da die Speicherzelle 50 eine verringerte Leistungsfähigkeit aufwies. Die Speicherzellen 42 - 50' sind mit zweiten Verbindungseinheiten 20, 20' elektrisch miteinander verbunden. Es ist ersichtlich, dass Öffnungsabschnitte 28 der Verbindungseinheiten 20, 20' dort angeordnet sind, wo die Kontaktabschnitte 14 verblieben sind. Die Kontaktabschnitte 14 sind grundsätzlich durch die Öffnungsabschnitte 28 hindurch ersichtlich. Für eine bessere Verständlichkeit wurde dieses Detail nicht dargestellt. Die Speicherzellen 42 - 50' sind jeweils an ihren Leitabschnitten 52 - 60' mit den zweiten Kontaktabschnitten 24 verbunden. Eine solche zweite Speichereinheit 40' kann beispielsweise als Stromspeicher genutzt werden, insbesondere in einer Ladevorrichtung, beispielsweise einer Ladesäule, für Elektrofahrzeuge.

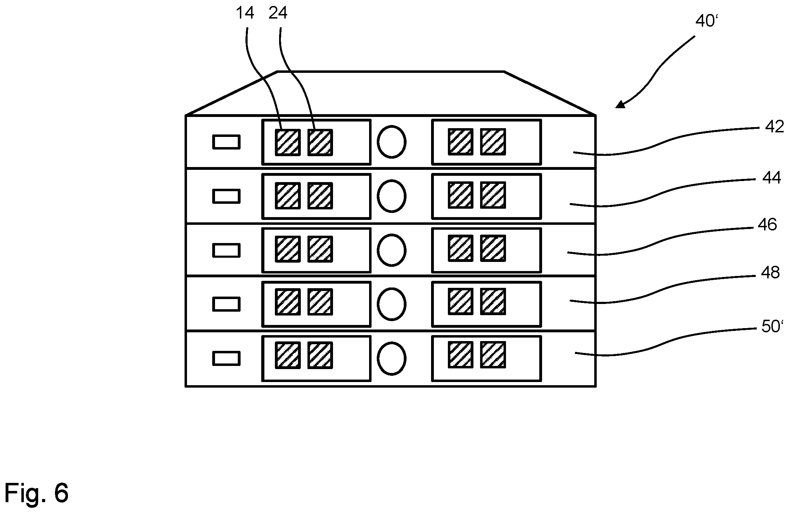

Figur 6 zeigt die zweite Speichereinheit 40', wobei die Verbindungseinheiten 20, 20' entfernt wurden und analog zur ersten Speichereinheit 40 lediglich die zweiten Kontaktabschnitte 24 und die Kontaktabschnitte 14 an den Leitabschnitten 52 - 60' angeordnet sind.

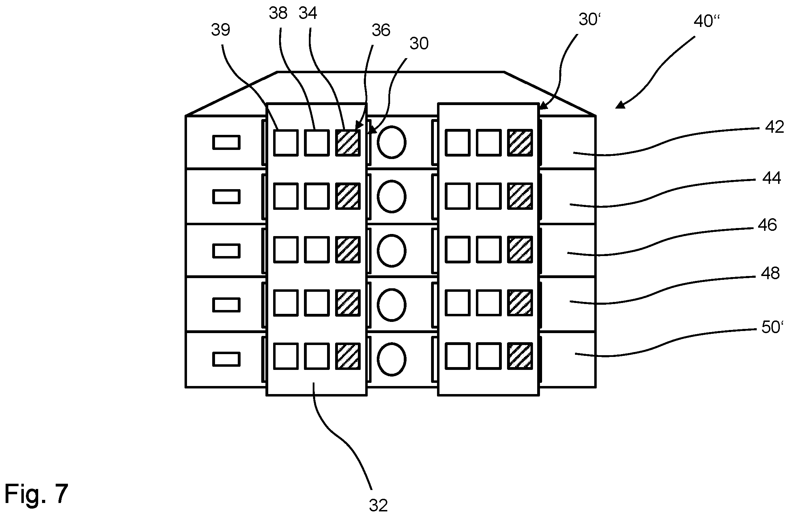

Figur 7 zeigt eine dritte Speichereinheit 40", an der zwei dritte Verbindungseinheiten 30, 30' angeordnet sind. Die an den Speicherzellen 42 - 50' verbliebenen Kontaktabschnitte 14, 24 ragen in die Öffnungsabschnitte 38, 39 des Verbindungskörpers 32 hinein. Die Verbindungseinheiten 30, 30' verbinden die Speicherzellen 42 - 50' elektrisch mittels der dritten Kontaktabschnitte 34 und dem Verbindungskörper 32. Die dritten Kontaktabschnitte 34 der dritten Verbindungseinheiten 30, 30' weisen darüber hinaus jeweils eine Sollbruchstelle 36 auf. Die dritten Kontaktabschnitte 34 können alternativ auch ohne die Sollbruchstelle ausgebildet sein, insbesondere wenn ein Entfernen der dritten Verbindungseinheiten 30, 30' nicht vorgesehen ist. Dies kann analog für die zweiten Verbindungseinheiten 20, 20' gelten, wenn die zweiten Verbindungseinheiten 20, 20' nicht von den Speicherzellen entfernt werden sollen.

Die im Vorherigen gezeigten Speichereinheiten 40, 40', 40" ermöglichen besonders vorteilhaft herstellbare und leistungsstarke Stromspeicher, die in unterschiedlichsten Anwendungen verwendet werden können. Insbesondere wird im Gegensatz zum Stand der Technik ein dritter Lebenszyklus eines Stromspeichers ermöglicht, der unter bisher bekannten Gesichtspunkten nicht wirtschaftlich herstellbar war.

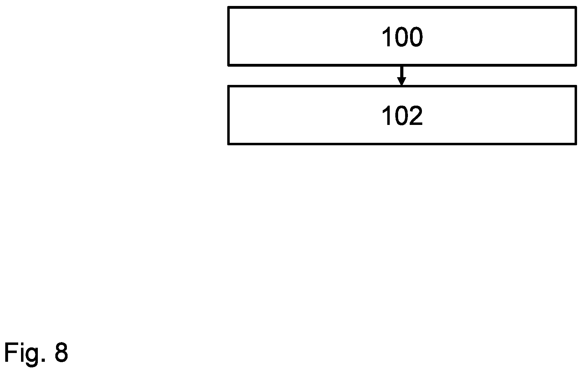

Figur 8 zeigt ein schematisches Verfahren zur Herstellung einer ersten Speichereinheit. In Schritt 100 werden mindestens zwei Speicherzellen 42 - 50 zur Speicherung elektrischer Energie und eine erste Verbindungseinheit 10, 10' zum elektrischen Kontaktieren der mindestens zwei Speicherzellen 42 - 50 bereitgestellt. In Schritt 102 werden die mindestens zwei Speicherzellen 42 - 50 mit der ersten Verbindungseinheit 10, 10' verbunden.

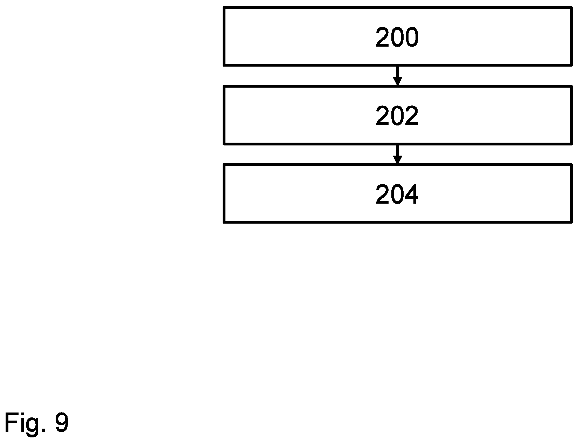

In Figur 9 ist ein Verfahren zur Herstellung einer zweiten Speichereinheit 40' gezeigt. In Schritt 200 wird eine erste Speichereinheit 40 bereitgestellt. In Schritt 202 wird die erste Verbindungseinheit 10, 10' derart entfernt, dass mindestens einer der Kontaktabschnitte 14 der ersten Verbindungseinheit 10, 10' zumindest abschnittsweise an einer der Speicherzellen 42 - 50 verbleiben, wobei der mindestens eine Kontaktabschnitt 14 von dem Verbindungskörper 12 an der Sollbruchstelle 16 getrennt wird.

In Schritt 204 werden die Speicherzellen 42 - 50 mittels einer zweiten Verbindungseinheit 20, 20' kontaktiert. Die zweite Verbindungseinheit 20, 20' weist zweite Kontaktabschnitte 24 auf, die zur Verbindung mit den Speicherzellen 42 - 50 ausgebildet sind.

Das Kontaktieren der Speicherzellen 42 - 50 erfolgt derart, dass mindestens ein Öffnungsabschnitt 28 der zweiten Verbindungseinheit 20, 20' an dem mindestens einen Kontaktabschnitt 14 derart wirkt, dass zumindest ein Teil eines an einer Speicherzelle 42 - 50 verbliebenen Kontaktabschnitts 14 in den Öffnungsabschnitt 28 hineinragen kann.

Alternativ kann das Kontaktieren durch eine stoffschlüssige Verbindung der zweiten Kontaktabschnitte 24 der Verbindungseinheit 20, 20' mit den verbliebenen ersten Kontaktabschnitten 14 erfolgen.

Der Schritt 202 kann darüber hinaus den Unterschritt umfassen, dass eine, zwei oder mehrere der Speicherzellen 42 - 50 ausgetauscht werden, beispielsweise durch eine Ersatzspeicherzelle 50'. Somit wird die Leistungsfähigkeit der zweiten Speichereinheit 40' gesteigert.

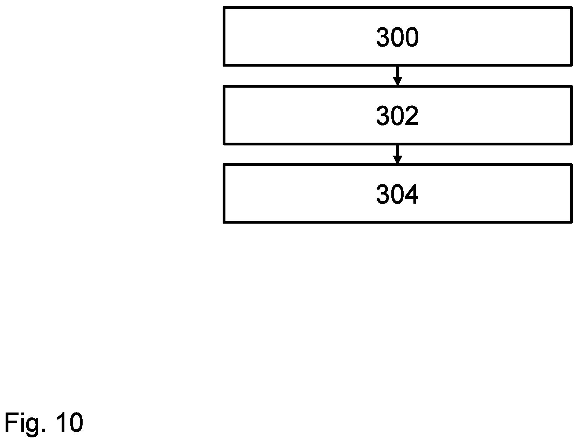

Figur 10 zeigt ein Verfahren zur Herstellung einer Speichereinheit 40" in einem weiteren Lebenszyklus, der beispielsweise der dritte oder vierte Lebenszyklus sein könnte. In Schritt 300 wird eine zweite Speichereinheit 40' bereitgestellt. In Schritt 302 werden die zweiten Verbindungseinheiten 20, 20' derart entfernt, dass mindestens einer der zweiten Kontaktabschnitte 24 der zweiten Verbindungseinheiten 20, 20' zumindest abschnittsweise an einer der Speicherzellen 42-50' verbleibt, wobei vorzugsweise der mindestens eine zweite Kontaktabschnitt 24 von dem Verbindungskörper 22 an der Sollbruchstelle 26 getrennt wird. In Schritt 304 werden die Speicherzellen 42-50' mittels einer dritten Verbindungseinheit 30, 30' kontaktiert.

Das Kontaktieren erfolgt insbesondere derart, dass mindestens ein erster Öffnungsabschnitt 38 der dritten Verbindungseinheit 30, 30' an dem mindestens einen Kontaktabschnitt 14 und ein zweiter Öffnungsabschnitt 39 der dritten Verbindungseinheit 30, 30' an dem mindestens einen zweiten Kontaktabschnitt 24 derart wirken, dass die verbliebenen Kontaktabschnitte 14, 24 in die Öffnungsabschnitte 38, 39 hineinragen.

Mit den im Vorherigen beschriebenen Verfahren können besonders effizient Speichereinheiten 40, 40', 40" recycelt beziehungsweise wiederverwendet werden. Insbesondere ist das Entfernen der Verbindungseinheiten 10, 10', 20, 20', 30, 30' mit geringem Aufwand möglich, da die Sollbruchstellen 16, 26, 36 das Verbleiben von Teilen der Verbindungseinheiten 10, 10', 20, 20', 30, 30' an den Speicherzellen 42-50' ermöglichen. Ferner können die Speichereinheiten 40', 40" besonders vorteilhaft hergestellt werden, da verbliebene Kontaktabschnitte 14, 24 nicht entfernt werden müssen und keine Beabstandungen zwischen Speicherzellen 42-50' und Verbindungseinheiten 20, 20', 30, 30' bei der Kontaktierung überbrückt werden müssen.

### BEZUGSZEICHEN

- 10, 10': erste Verbindungseinheit
- 12: Verbindungskörper
- 14: Kontaktabschnitt
- 16: Sollbruchstelle
- 20, 20': zweite Verbindungseinheit
- 22: Verbindungskörper
- 24: zweiter Kontaktabschnitt
- 26: Sollbruchstelle
- 28: Öffnungsabschnitt
- 30, 30': dritte Verbindungseinheit
- 32: Verbindungskörper
- 34: dritter Kontaktabschnitt
- 36: Sollbruchstelle
- 38: Öffnungsabschnitt
- 39: Öffnungsabschnitt
- 40, 40', 40": Speichereinheit
- 42: Speicherzelle
- 44: Speicherzelle
- 46: Speicherzelle
- 48: Speicherzelle
- 50, 50': Speicherzelle
- 52: Leitabschnitt
- 54: Leitabschnitt
- 56: Leitabschnitt
- 58: Leitabschnitt
- 60: Leitabschnitt

## Patentansprüche

1. Verbindungseinheit (10, 10', 20, 20', 30, 30') zum elektrischen Kontaktieren von mindestens zwei Speicherzellen (42-50') zur Speicherung elektrischer Energie, umfassend
- einen stromleitenden Verbindungskörper (12, 22, 32),
- mindestens zwei Kontaktabschnitte (14, 24, 34), die zur Verbindung mit den Speicherzellen (42-50') ausgebildet sind,
- wobei mindestens einer der zwei Kontaktabschnitte (14, 24, 34) eine Sollbruchstelle (16, 26, 36) aufweist und/oder wobei die Verbindungseinheit (10, 10', 20, 20', 30, 30') mindestens einen Öffnungsabschnitt (28, 38, 39) umfasst, der angeordnet und ausgebildet ist, dass zumindest ein Teil eines an einer Speicherzelle (42-50') verbliebenen Kontaktabschnitts in den Öffnungsabschnitt (28, 38, 39) hineinragen kann.

2. Verbindungseinheit (10, 10', 20, 20', 30, 30') nach Anspruch 1, wobei die Sollbruchstelle (16, 26, 36) derart ausgebildet ist, dass beim Entfernen der Verbindungseinheit (10, 10', 20, 20', 30, 30') von den mindestens zwei Speicherzellen (42-50'), zumindest der Kontaktabschnitt mit der Sollbruchstelle (16, 26, 36) zumindest teilweise von dem Verbindungskörper (12, 22, 32) getrennt wird und vorzugsweise an der Speicherzelle (42-50') verbleibt.

3. Verbindungseinheit (10, 10', 20, 20', 30, 30') nach einem der vorherigen Ansprüche, wobei die Sollbruchstelle (16, 26, 36) derart ausgebildet ist, dass beim Entfernen der Verbindungseinheit (10, 10', 20, 20', 30, 30') eine vordefinierte Kerbwirkung entsteht.

4. Verbindungseinheit (10, 10', 20, 20', 30, 30') nach einem der vorherigen Ansprüche, wobei die Sollbruchstelle (16, 26, 36) eine geringere Materialstärke aufweist als die mindestens zwei Kontaktabschnitte (14, 24, 34) und/oder der Verbindungskörper (12, 22, 32).

5. Verbindungseinheit (10, 10', 20, 20', 30, 30') nach einem der vorherigen Ansprüche, wobei
- die mindestens zwei Kontaktabschnitte (14, 24, 34) und/oder der Verbindungskörper (12, 22, 32) ein erstes Material, und
- die Sollbruchstelle (16, 26, 36) ein zweites Material aufweisen,
- wobei das erste Material verschieden von dem zweiten Material ausgebildet ist.

6. Verbindungseinheit (10, 10', 20, 20', 30, 30') nach einem der vorherigen Ansprüche, wobei die Sollbruchstelle (16, 26, 36) eine, zwei oder mehrere Öffnungen aufweist, wobei vorzugsweise die Öffnung bzw. die zwei oder mehreren Öffnungen als Kerbe bzw. Kerben und/oder als Perforation bzw. Perforationen ausgebildet ist bzw. sind.

7. Verbindungseinheit (10, 10', 20, 20', 30, 30') nach einem der vorherigen Ansprüche, wobei der mindestens eine Öffnungsabschnitt (28, 38, 39) eine Ausnehmung aufweist oder als Ausnehmung ausgebildet ist, die insbesondere als Durchgangsöffnung ausgebildet ist.

8. Verbindungseinheit (10, 10', 20, 20', 30, 30') nach einem der vorherigen Ansprüche, wobei die mindestens zwei Kontaktabschnitte (14, 24, 34) und der mindestens eine Öffnungsabschnitt (28, 38, 39) derart dimensioniert sind, dass einer der Kontaktabschnitte (14, 24, 34) innerhalb des mindestens einen Öffnungsabschnitts (28, 38, 39) anordenbar ist.

9. Erste Speichereinheit (40) zur Speicherung elektrischer Energie, insbesondere für ein elektrisch angetriebenes Fahrzeug und/oder einen Stromspeicher, umfassend
- mindestens zwei Speicherzellen (42-50'),
- eine erste Verbindungseinheit (10, 10', 20, 20', 30, 30') nach einem der vorherigen Ansprüche 1-8,
- wobei die mindestens zwei Speicherzellen (42-50') mittels der ersten Verbindungseinheit (10, 10', 20, 20', 30, 30') elektrisch verbunden sind.

10. Zweite Speichereinheit (40', 40") zur Speicherung elektrischer Energie, insbesondere für einen Stromspeicher, umfassend
- mindestens zwei Speicherzellen (42-50'), wobei zumindest eine der Speicherzellen (42-50') einen verbliebenen Kontaktabschnitt einer ersten Verbindungseinheit (10, 10', 20, 20', 30, 30') aufweist,
- eine zweite Verbindungseinheit (10, 10', 20, 20', 30, 30'), nach einem der vorherigen Ansprüche 1-8, wobei ein Öffnungsabschnitt (28, 38, 39) der zweiten Verbindungseinheit derart angeordnet ist, dass der verbliebene Kontaktabschnitt in den Öffnungsabschnitt (28, 38, 39) hineinragt, und/oder wobei ein Kontaktabschnitt (14, 24, 34) der zweiten Verbindungseinheit (10, 10', 20, 20', 30, 30') mit dem verbliebenen Kontaktabschnitt (14, 24, 34) verbunden ist, vorzugsweise stoffschlüssig, insbesondere schweißtechnisch, und
- wobei die mindestens zwei Speicherzellen (42-50') mittels der zweiten Verbindungseinheit (10, 10', 20, 20', 30, 30') elektrisch verbunden sind.

11. Verfahren zur Herstellung einer ersten Speichereinheit (40)nach Anspruch 9, umfassend die Schritte:
- Bereitstellen von mindestens zwei Speicherzellen (42-50') zur Speicherung elektrischer Energie und einer ersten Verbindungseinheit (10, 10', 20, 20', 30, 30') zum elektrischen Kontaktieren der mindestens zwei Speicherzellen (42-50'), insbesondere einer Verbindungseinheit (10, 10', 20, 20', 30, 30') nach einem der vorherigen Ansprüche 1-8; und
- elektrisches Verbinden der mindestens zwei Speicherzellen (42-50') mit der ersten Verbindungseinheit (10, 10', 20, 20', 30, 30').

12. Verfahren zur Herstellung einer zweiten Speichereinheit (40', 40")nach Anspruch 10, umfassend die Schritte:
- Bereitstellen einer ersten Speichereinheit (40), insbesondere einer ersten Speichereinheit nach Anspruch 9;
- Entfernen der ersten Verbindungseinheit (10, 10', 20, 20', 30, 30') derart, dass mindestens einer der Kontaktabschnitte (14, 24, 34) der ersten Verbindungseinheit (10, 10', 20, 20', 30, 30') zumindest abschnittsweise an einer der Speicherzellen (42-50') verbleibt, wobei vorzugsweise der mindestens eine verbliebene Kontaktabschnitt von dem Verbindungskörper (12, 22, 32) an der Sollbruchstelle (16, 26, 36) getrennt wird;
- Kontaktieren der Speicherzellen (42-50') mittels einer zweiten Verbindungseinheit (10, 10', 20, 20', 30, 30'), insbesondere einer Verbindungseinheit (10, 10', 20, 20', 30, 30') nach einem der vorherigen Ansprüche 1-8, mit mindestens zwei Kontaktabschnitten (14, 24, 34), die zur Verbindung mit den Speicherzellen (42-50') ausgebildet sind;
- wobei der verbliebene Kontaktabschnitt (14, 24, 34) in den Öffnungsabschnitt (28, 38, 39) hineinragt und/oder wobei zumindest einer der Kontaktabschnitte (14, 24, 34) der zweiten Verbindungseinheit (10, 10', 20, 20', 30, 30') mit dem verbliebenen Kontaktabschnitt (14, 24, 34) verbunden wird, vorzugsweise stoffschlüssig, insbesondere schweißtechnisch.

13. Verfahren nach dem vorherigen Anspruch 12, umfassend den Schritt:
- Austauschen einer, zwei oder mehrerer der Speicherzellen (42-50') der ersten Speichereinheit (40).

## Claims

1. Connection unit (10, 10', 20, 20', 30, 30') for electrically contacting at least two storage cells (42-50') for storing electrical energy, comprising
- a current-conducting connecting body (12, 22, 32),
- at least two contact portions (14, 24, 34) which are configured for connection to the storage cells (42-50'),
- wherein at least one of the two contact portions (14, 24, 34) has a predetermined breaking point (16, 26, 36) and/or wherein the connection unit (10, 10', 20, 20', 30, 30') comprises at least one opening portion (28, 38, 39) which is arranged and configured such that at least part of a contact portion remaining on a storage cell (42-50') can protrude into the opening portion (28, 38, 39).

2. Connection unit (10, 10', 20, 20', 30, 30') according to claim 1, wherein the predetermined breaking point (16, 26, 36) is configured such that, when the connection unit (10, 10', 20, 20', 30, 30') is removed from the at least two storage cells (42-50'), at least the contact portion with the predetermined breaking point (16, 26, 36) is at least partially separated from the connecting body (12, 22, 32) and preferably remains on the storage cell (42-50').

3. Connection unit (10, 10', 20, 20', 30, 30') according to any one of the preceding claims, wherein the predetermined breaking point (16, 26, 36) is configured such that, when the connection unit (10, 10', 20, 20', 30, 30') is removed, a predefined notch effect is generated.

4. Connecting unit (10, 10', 20, 20', 30, 30') according to any one of the preceding claims, wherein the predetermined breaking point (16, 26, 36) has a smaller material thickness than the at least two contact portions (14, 24, 34) and/or the connecting body (12, 22, 32).

5. Connection unit (10, 10', 20, 20', 30, 30') according to any one of the preceding claims, wherein
- the at least two contact portions (14, 24, 34) and/or the connecting body (12, 22, 32) comprise a first material, and
- the predetermined breaking point (16, 26, 36) have a second material,
- wherein the first material is configured differently from the second material.

6. Connection unit (10, 10', 20, 20', 30, 30') according to any one of the preceding claims, wherein the predetermined breaking point (16, 26, 36) has one, two or more openings, wherein the opening or the two or more openings are preferably formed as a notch or notches and/or as a perforation or perforations. perforations.

7. Connection unit (10, 10', 20, 20', 30, 30') according to one of the preceding claims, wherein the at least one opening portion (28, 38, 39) has a recess or is configured as a recess, which is configured in particular as a through opening.

8. Connection unit (10, 10', 20, 20', 30, 30') according to any one of the preceding claims, wherein the at least two contact portions (14, 24, 34) and the at least one opening portion (28, 38, 39) are dimensioned such that one of the contact portions (14, 24, 34) can be arranged within the at least one opening portion (28, 38, 39).

9. First storage unit (40) for storing electrical energy, in particular for an electrically driven vehicle and/or an electricity storage device, comprising
- at least two storage cells (42-50'),
- a first connection unit (10, 10', 20, 20', 30, 30') according to any one of the preceding claims 1-8,
- wherein the at least two storage cells (42-50') are electrically connected by means of the first connection unit (10, 10', 20, 20', 30, 30').

10. Second storage unit (40', 40") for storing electrical energy, in particular for a power storage device, comprising
- at least two storage cells (42-50'), wherein at least one of the storage cells (42-50') has a remaining contact portion of a first connection unit (10, 10', 20, 20', 30, 30'),
- a second connection unit (10, 10', 20, 20', 30, 30') according to any one of the preceding claims 1-8, wherein an opening portion (28, 38, 39) of the second connection unit is arranged such that that the remaining contact portion projects into the opening portion (28, 38, 39), and/or wherein a contact portion (14, 24, 34) of the second connecting unit (10, 10', 20, 20', 30, 30') is connected to the remaining contact portion (14, 24, 34), preferably by material bonding, in particular by welding, and
- wherein the at least two storage cells (42-50') are electrically connected by means of the second connecting unit (10, 10', 20, 20', 30, 30').

11. Method for producing a first storage unit (40) according to claim 9, comprising the steps:
- providing at least two storage cells (42-50') for storing electrical energy and a first connecting unit (10, 10', 20, 20', 30, 30') for electrically contacting the at least two storage cells (42-50'), in particular a connection unit (10, 10', 20, 20', 30, 30') according to any one of the preceding claims 1-8; and
- electrically connecting the at least two storage cells (42-50') to the first connection unit (10, 10', 20, 20', 30, 30').

12. Method for producing a second storage unit (40', 40") according to claim 10, comprising the steps:
- providing a first storage unit (40), in particular a first storage unit according to claim 9;
- removing the first connection unit (10, 10', 20, 20', 30, 30') in such a way that at least one of the contact portions (14, 24, 34) of the first connection unit (10, 10', 20, 20', 30, 30') remains at least in sections on one of the storage cells (42-50'), wherein preferably the at least one remaining contact portion is separated from the connecting body (12, 22, 32) at the predetermined breaking point (16, 26, 36);
- Contacting the storage cells (42-50') by means of a second connecting unit (10, 10', 20, 20', 30, 30'), in particular a connecting unit (10, 10', 20, 20', 30, 30') according to any one of the preceding claims 1-8, with at least two contact portions (14, 24, 34) which are configured for connection to the storage cells (42-50');
- wherein the remaining contact portion (14, 24, 34) protrudes into the opening portion (28, 38, 39) and/or wherein at least one of the contact portions (14, 24, 34) of the second connection unit (10, 10', 20, 20', 30, 30') is connected to the remaining contact portion (14, 24, 34), preferably in a material-locking manner, in particular by welding.

13. Method according to the preceding claim 12, comprising the step of:
- replacing one, two or more of the storage cells (42-50') of the first storage unit (40).

## Revendications

1. Unité de connexion (10, 10', 20, 20', 30, 30') pour la connexion électrique d'au moins deux cellules de stockage (42-50') destinées à stocker de l'énergie électrique, comprenant
- un corps de connexion conducteur de courant (12, 22, 32),
- au moins deux parties de contact (14, 24, 34) qui sont configurées pour être reliées aux cellules de stockage (42-50'),
- dans laquelle au moins l'une des deux parties de contact (14, 24, 34) présente un point de rupture prédéterminé (16, 26, 36) et/ou dans laquelle l'unité de connexion (10, 10', 20, 20', 30, 30') comprend au moins une partie d'ouverture (28, 38, 39) qui est agencée et configurée de telle sorte qu'au moins une partie d'une partie de contact restant sur une cellule de stockage (42-50') peut faire saillie dans la partie d'ouverture (28, 38, 39).

2. Unité de connexion (10, 10', 20, 20', 30, 30') selon la revendication 1, dans laquelle le point de rupture prédéterminé (16, 26, 36) est configuré de telle sorte que, lorsque l'unité de connexion (10, 10', 20, 20', 30, 30') est retirée des au moins deux cellules de stockage (42-50'), au moins la partie de contact avec le point de rupture prédéterminé (16, 26, 36) est au moins partiellement séparée du corps de connexion (12, 22, 32) et reste de préférence sur la cellule de stockage (42-50').

3. Unité de connexion (10, 10', 20, 20', 30, 30') selon l'une quelconque des revendications précédentes, dans laquelle le point de rupture prédéterminé (16, 26, 36) est configuré de telle sorte que, lorsque l'unité de connexion (10, 10', 20, 20', 30, 30') est retirée, un effet d'encoche prédéfini est généré.

4. Unité de connexion (10, 10', 20, 20', 30, 30') selon l'une quelconque des revendications précédentes, dans laquelle le point de rupture prédéterminé (16, 26, 36) présente une épaisseur de matériau inférieure à celle des au moins deux parties de contact (14, 24, 34) et/ou du corps de connexion (12, 22, 32).

5. Unité de connexion (10, 10', 20, 20', 30, 30') selon l'une quelconque des revendications précédentes, dans laquelle
- les au moins deux parties de contact (14, 24, 34) et/ou le corps de connexion (12, 22, 32) comprennent un premier matériau, et
- le point de rupture prédéterminé (16, 26, 36) comprend un deuxième matériau,
- le premier matériau étant configuré différemment du deuxième matériau.

6. Unité de connexion (10, 10', 20, 20', 30, 30') selon l'une quelconque des revendications précédentes, dans laquelle le point de rupture prédéterminé (16, 26, 36) comporte une, deux ou plusieurs ouvertures, dans laquelle l'ouverture ou les deux ou plusieurs ouvertures sont de préférence formées comme une encoche ou des encoches et/ou comme une perforation ou des perforations.

7. Unité de connexion (10, 10', 20, 20', 30, 30') selon l'une des revendications précédentes, dans laquelle la au moins une partie d'ouverture (28, 38, 39) présente un évidement ou est configurée comme un évidement, qui est en particulier configuré comme une ouverture traversante.

8. Unité de connexion (10, 10', 20, 20', 30, 30') selon l'une quelconque des revendications précédentes, dans laquelle les au moins deux parties de contact (14, 24, 34) et la au moins une partie d'ouverture (28, 38, 39) sont dimensionnées de telle sorte que l'une des parties de contact (14, 24, 34) peut être disposée à l'intérieur de la au moins une partie d'ouverture (28, 38, 39).

9. Première unité de stockage (40) pour stocker de l'énergie électrique, en particulier pour un véhicule à propulsion électrique et/ou un dispositif de stockage d'électricité, comprenant
- au moins deux cellules de stockage (42-50'),
- une première unité de connexion (10, 10', 20, 20', 30, 30') selon l'une quelconque des revendications 1 à 8 précédentes,
- dans laquelle les au moins deux cellules de stockage (42-50') sont reliées électriquement au moyen de la première unité de connexion (10, 10', 20, 20', 30, 30').

10. Deuxième unité de stockage (40', 40") pour stocker de l'énergie électrique, en particulier pour un dispositif de stockage d'énergie, comprenant
- au moins deux cellules de stockage (42-50'), dans laquelle au moins une des cellules de stockage (42-50') comporte une partie de contact restante d'une première unité de connexion (10, 10', 20, 20', 30, 30'),
- une deuxième unité de connexion (10, 10', 20, 20', 30, 30') selon l'une quelconque des revendications 1 à 8 précédentes, dans laquelle une partie d'ouverture (28, 38, 39) de la deuxième unité de connexion est agencée de telle sorte que la partie de contact restante fait saillie dans la partie d'ouverture (28, 38, 39), et/ou dans laquelle une partie de contact (14, 24, 34) de la deuxième unité de connexion (10, 10', 20, 20', 30, 30') est reliée à la partie de contact restante (14, 24, 34), de préférence par liaison de matériaux, en particulier par soudage, et
- dans lequel les au moins deux cellules de stockage (42-50') sont reliées électriquement au moyen de la deuxième unité de connexion (10, 10', 20, 20', 30, 30').

11. Procédé de fabrication d'une première unité de stockage (40) selon la revendication 9, comprenant les étapes suivantes :
- fournir au moins deux cellules de stockage (42-50') pour stocker de l'énergie électrique et une première unité de connexion (10, 10', 20, 20', 30, 30') pour mettre en contact électrique les au moins deux cellules de stockage (42-50'), en particulier une unité de connexion (10, 10', 20, 20', 30, 30') selon l'une quelconque des revendications 1 à 8 précédentes ; et
- connecter électriquement les au moins deux cellules de stockage (42-50') à la première unité de connexion (10, 10', 20, 20', 30, 30').

12. Procédé de fabrication d'une deuxième unité de stockage (40', 40") selon la revendication 10, comprenant les étapes suivantes :
- le fait de fournir une première unité de stockage (40), en particulier une première unité de stockage selon la revendication 9 ;
- retirer la première unité de connexion (10, 10', 20, 20', 30, 30') de telle sorte qu'au moins une des parties de contact (14, 24, 34) de la première unité de connexion (10, 10', 20, 20', 30, 30') reste au moins en partie sur l'une des cellules de stockage (42-50'), la ou les parties de contact restantes étant de préférence séparées du corps de connexion (12, 22, 32) au niveau du point de rupture prédéterminé (16, 26, 36) ;
- mise en contact des cellules de stockage (42-50') au moyen d'une deuxième unité de connexion (10, 10', 20, 20', 30, 30'), en particulier une unité de connexion (10, 10', 20, 20', 30, 30') selon l'une quelconque des revendications 1 à 8 précédentes, avec au moins deux parties de contact (14, 24, 34) qui sont configurées pour être connectées aux cellules de stockage (42-50') ;
- dans laquelle la partie de contact restante (14, 24, 34) fait saillie dans la partie d'ouverture (28, 38, 39) et/ou dans laquelle au moins une des parties de contact (14, 24, 34) de la deuxième unité de connexion (10, 10', 20, 20', 30, 30') est reliée à la partie de contact restante (14, 24, 34), de préférence par liaison de matière, en particulier par soudage.

13. Procédé selon la revendication 12 précédente, comprenant l'étape consistant à :
- remplacer une, deux ou plusieurs des cellules de stockage (42-50') de la première unité de stockage (40).
